# EUROPÄISCHE PATENTANMELDUNG

(11) **EP 1 271 270 A2**
(43) Veröffentlichungstag der Anmeldung: **02.01.2003**
(21) Anmeldenummer: 02012090.3
(22) Anmeldetag: 31.05.2002
(51) Int. Cl.: G05B 19/042

(54) **Verfahren zur Freigabe eines Zugriffs auf ein elektronisches Steuergerät**

(30) Priorität: 25.06.2001 DE 10130493
(71) Anmelder: BRUENINGHAUS HYDROMATIK GMBH, 89275 Elchingen (DE)
(72) Erfinder: Misselwitz, Sigurd, 89428 Syrgenstein (DE); Grundmann, Uwe, 89275 Elchingen (DE); Brand, Michael, 89075 Ulm (DE)
(74) Vertreter: Körfer, Thomas, Dipl.-Phys.

(57) **Zusammenfassung**

Die Erfindung betrifft ein Verfahren zur Freigabe des Zugriffs auf ein elektronisches Steuergerät (2) durch eine Rechnereinheit (1) zur Programmierung des elektronischen Steuergeräts (2) mit einer Software (3). In der Recheneinheit (1) sind zumindest eine Vergleichsgröße (9a, 9b, 9c) und eine erste Prüfgröße (PG1) gespeichert. Eine zweite Prüfgröße (PG2) ist in dem elektronischen Steuergerät (2) gespeichert und eine dritte Prüfgröße (PG3) ist in der Software (3) festgelegt. Das Verfahren umfaßt folgende Verfahrensschritte:
- Einlesen der zweiten Prüfgröße (PG2) aus der elektronischen Steuereinheit (2) und der dritten Prüfgröße (PG3) aus der Software (3) in die Rechnereinheit (1) ;
- Überprüfen zumindest einer der Prüfgrößen (PG1, PG2, PG3) mit zumindest einer vorbestimmten Vergleichsgröße (9a, 9b, 9c) und/oder mit den beiden anderen Prüfgrößen (PG1, PG2, PG3) auf Identität;
- Vergleich der festgestellten Identität mit zumindest einem Teil eines Freigabekriteriums (PG1==dev; PG1==ser; PG2==uni, PG3==uni; PG1==PG2==PG3); und
- Freigabe des Zugriffs bei Erfüllung eines Freigabekriteriums (PG1==dev; PG1 ==ser; PG2==uni, PG3==uni; PG1==PG2==PG3).

## Beschreibung

Die Erfindung betrifft ein Verfahren zur Freigabe eines Zugriffs auf ein elektronisches Steuergerät durch eine Recheneinheit zur Programmierung des elektronischen Steuergeräts mit einer Software.

Elektronische Steuergeräte finden beispielsweise in der Steuerung von Fahrzeugantrieben Verbreitung. Mit Hilfe einer in dem Steuergerät abgespeicherten Software ist es möglich, auch komplexe Steuerungsvorgänge zu realisieren. Die Software, die den Steuerungsalgorithmus enthält, wird durch den Hersteller in dem Steuergerät gespeichert. Um bei Weiterentwicklung der verwendeten Software oder Anpassung von Parametern das Steuergerät nicht komplett ersetzen zu müssen, ist in dem Steuergerät ein wiederbeschreibbarer Speicher integriert. Zum Ändern des Speicherinhalts ist ein Zugriff auf das Steuergerät erforderlich, welcher beispielsweise durch einen PC oder ein Notebook durchgeführt wird. Mit Hilfe eines auf dem PC oder Notebook installierten Programms kann somit beispielsweise eine neue Software über eine Schnittstelle auf das Steuergerät aufgespielt werden.

Nachteilig dabei ist, daß durch das Programm, welches auf dem PC oder Notebook installiert ist, ein genereller Zugriff auf das Steuergerät möglich ist. Um den unkontrollierten Zugriff auf das Steuergerät zu verhindern, ist es daher erforderlich, eine neue Softwareversion durch einen autorisierten Kundendienst auf das Steuergerät aufzuspielen. Hierzu wird dem autorisierten Kundendienst ein geeignetes Schnittstellenprogramm zur Verfügung gestellt.

Es ist Aufgabe der Erfindung ein Verfahren und ein Computerprogramm zu schaffen, mit dem der Zugriff auf das Steuergerät freigegeben wird, wobei eine Unterscheidung zwischen verschiedenen Berechtigungen erfolgt.

Die Aufgabe wird durch das erfindungsgemäße Verfahren nach Anspruch 1 bzw. das Computerprogramm nach Anspruch 10 oder 11 gelöst. Die Unteransprüche enthalten vorteilhafte Weiterbildungen des erfindungsgemäßen Verfahrens.

Anhand der Zeichnungen wird ein Ausführungsbeispiel des erfindungsgemäßen Verfahrens in der nachfolgenden Beschreibung näher erläutert. Es zeigen:
- Fig. 1: eine schematische Darstellung eines Systems zur Durchführung des erfindungsgemäßen Verfahrens; und
- Fig. 2: eine tabellarische Übersicht über Freigabekriterien für einen Zugriff.

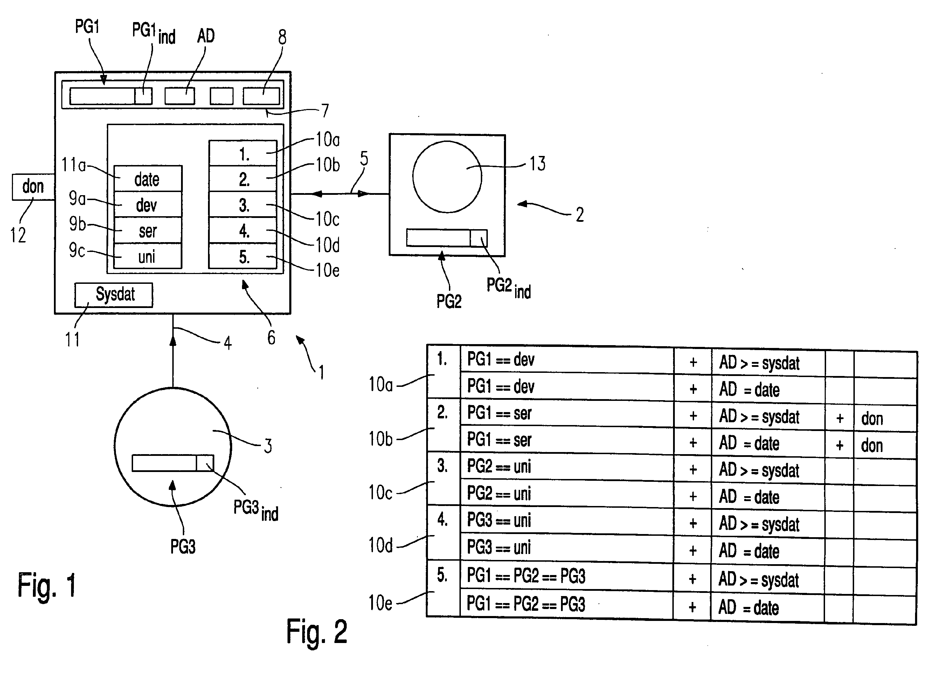

In Fig. 1 ist schematisch der Aufbau eines Systems dargestellt, das zur Durchführung des erfindungsgemäßen Verfahrens geeignet ist. Eine Rechnereinheit 1 ist mit einem elektronischen Steuergerät 2 verbunden, auf dem eine Software 13 installiert ist und auf welches eine neue Software 3 aufgespielt werden soll. Die Software 3 kann im dargestellten Ausführungsbeispiel über eine erste Datenleitung 4 in die Rechnereinheit 1 eingelesen werden. Als erste Datenleitung 4 kann eine Telefonleitung dienen, so daß die Software 3 aus dem Internet heruntergeladen werden kann. Die Verbindung zwischen der Rechnereinheit 1 und dem elektronischen Steuergerät 2 wird durch eine zweite Datenleitung 5 hergestellt. Die Verbindung der Rechnereinheit 1 mit dem elektronischen Steuergerät 2 über die zweite Datenleitung 5 ist zur bidirektionalen Übertragung von Daten geeignet.

Zur Durchführung der Verfahrensschritte des erfindungsgemäßen Verfahrens ist ein Computerprogramm 6 in einem der Rechnereinheit 1 zugänglichen Speichermedium gespeichert. In einem Speicherelement der Rechnereinheit 1 ist ein Lizenzschlüssel 7 gespeichert. Der Lizenzschlüssel 7 besteht aus mehreren Segmenten. Eines des Segmente des Lizenzschlüssels 7 ist als eine erste Prüfgröße PG1 ausgeführt. Die erste Prüfgröße PG1 kann beispielsweise eine Identifikation eines Kunden oder Standorts beinhalten. In einem weiteren Segment des Lizenzschlüssels 7 ist ein Ablaufdatum AD abgelegt. Zum Überprüfen der Richtigkeit eines Lizenzschlüssels 7 dient in einem weiteren Segment eine Kontrollsumme 8. Fehlerhafte Eingaben des Lizenzschlüssels 7 werden damit erkannt und darüber hinaus ein Kopieren eines einzelnen Segments eines anderen gültigen Lizenzschlüssels 7 verhindert.

In der elektronischen Steuereinheit 2 ist neben einer Software zum Durchführen der Steuerungsaufgaben eine zweite Prüfgröße PG2 gespeichert. Die zweite Prüfgröße PG2 entspricht in ihrem Aufbau der ersten Prüfgröße PG1. Eine dritte Prüfgröße PG3, welche dem Aufbau nach identisch ist mit der ersten und zweiten Prüfgröße PG1 und PG2 ist in der Software 3 abgelegt. Die erste bis dritte Prüfgröße PG1, PG2 und PG3 sind alphanumerisch aufgebaut, wobei durch den numerischen Teil ein Index der entsprechenden Prüfgröße gebildet wird, so daß in der dritten Prüfgröße PG3 neuere Versionen der Software 3 durch einen erhöhten Index gekennzeichnet werden können.

In dem Computerprogramm 6 sind Vergleichskriterien 9a, 9b und 9c gespeichert. Neben den im dargestellten Ausführungsbeispiel Vergleichsgrößen 9a bis 9c sind fünf Kriterien 10a bis 10e ebenfalls in dem Computerprogramm 6 festgelegt, für die eine Freigabe des Zugriffs auf das elektronische Steuergerät 2 erfolgt. Eine detaillierte Betrachtung der Freigabekriterien 10a bis 10e erfolgt unter Bezugnahme auf Fig. 2.

In einem ersten Verfahrensschritt werden die drei Prüfgrößen PG1, PG2 und PG3 von dem Computerprogramm 6 eingelesen. Nach dem Einlesen der drei Prüfgrößen PG1, PG2 und PG3 in das Computerprogramm 6 wird ein Vergleich der ersten Prüfgröße PG1 mit der ersten Vergleichsgröße 9a durchgeführt. Ist bei dem Vergleich zwischen der ersten Prüfgröße PG1 und der ersten Vergleichsgröße 9a eine Identität feststellbar, erfolgt in einem nächsten Verfahrensschritt die Überprüfung, ob die festgestellte Identität zwischen der ersten Prüfgröße PG1 und der ersten Vergleichsgröße 9a einem der Freigabekriterien 10a bis 10e entspricht. Entspricht die festgestellte Identität zwischen der Prüfgröße und dem Vergleichsgröße einem der Freigabekriterien 10a bis 10e, so wird der Zugriff von der Recheneinheit 1 auf das elektronische Steuergerät 2 freigegeben, so daß die Software 3 auf das elektronische Steuergerät 2 aufgespielt werden kann.

Ergibt sich bei dem Vergleich der ersten Prüfgröße PG1 mit der ersten Vergleichsgröße 9a keine Identität, so wird die erste Prüfgröße PG1 durch Vergleich mit der zweiten Vergleichsgröße 9b auf Identität überprüft. Wird dabei zwischen der ersten Prüfgröße PG1 und der zweiten Vergleichsgröße 9b eine Identität festgestellt, erfolgt wiederum eine Überprüfung der festgestellten Identität anhand der Freigabekriterien 10a bis 10e.

Fünf bevorzugte Freigabekriterien sind in der Fig. 2 tabellarisch dargestellt. Das erste Freigabekriterium beinhaltet eine Identität zwischen einer ersten Prüfgröße PG1 und der ersten Vergleichsgröße 9a, sowie als zweites ebenfalls zu erfüllendes Kriterium die Gültigkeit des in dem Lizenzschlüssel 7 gespeicherten Ablaufdatums AD. Zur Überprüfung der Gültigkeit des Ablaufdatums AD wird in einem Verfahrensschritt zunächst das Ablaufdatum AD von dem Computerprogramm 6 eingelesen und nachfolgend mit einer weiteren Vergleichsgröße beispielsweise einem Systemdatum 11 der Rechnereinheit 3 verglichen. Ist das Systemdatum 11 identisch mit dem jeweils aktuellen Tagesdatum, so ist das Ablaufdatum AD als gültig zu bewerten, wenn es größer oder gleich dem aktuellen Tagesdatum ist. Eine zweite Möglichkeit, die mit der Gültigkeit des Ablaufdatums AD bewertet wird, ist die Identität des Ablaufdatums AD mit einem in dem Computerprogramm 6 gespeicherten festen Datumswert. Auf diese Weise ist es möglich, Lizenzschlüssel 7 zu vergeben, welche unbefristete Gültigkeit besitzen. Das erste Freigabekriterium entspricht damit einem freien Zugriff auf alle elektronischen Steuergeräte 2. für jede mögliche Software 3. Ein solcher allgemeiner nicht eingeschränkter Zugriff ist z. B. für die Entwicklungsabteilung des Herstellers geeignet.

Wird für die erste Prüfgröße PG1 eine Identität mit der zweiten Vergleichsgröße 9b festgestellt, so ist der erste Teil des zweiten Freigabekriteriums erfüllt. In einem nächsten Verfahrensschritt wird die Existenz einer Hardware-Kopierschutzvorrichtung 12 überprüft. Wird die Existenz des Hardware-Kopierschutzes 12 festgestellt und ergibt die Überprüfung des Ablaufdatums AD dessen Gültigkeit, so erfolgt die Freigabe. Die Freigabe ist wiederum allgemeingültig und nicht an spezielle elektronische Steuergeräte 2 oder Softwareversionen 3 gebunden. Eine solche Freigabe ist z. B. geeignet, um Kundendiensten den Zugriff auf das Steuergerät 2 zu ermöglichen.

Ergibt sich bei dem Vergleich der ersten Prüfgröße PG1 mit den Vergleichsgrößen 9a bis 9c keine Übereinstimmung, die zur einer Freigabe führt, so werden die zweite und dritte Prüfgröße PG2 und PG3 auf eine evtl. Identität mit einem Teil eines der Freigabekriterien 10a bis 10e überprüft. Ergibt die zweite Prüfgröße PG2, welche aus dem elektronischen Steuergerät 2 ausgelesen wird, eine Identität mit einer dritten Vergleichsgröße 9c, so ist der erste Teil eines dritten Vergleichskriteriums erfüllt. Wird zu dem ein gültiges Ablaufdatum AD erkannt, so erfolgt die Freigabe des Zugriffs auf das Steuergerät 2.

Wird eine Identität zwischen der dritten Prüfgröße PG3 und der dritten Vergleichsgröße 9c festgestellt und gleichzeitig ein gültiges Ablaufdatum AD erkannt, erfolgt ebenfalls eine Freigabe. Dadurch ist es möglich durch Festsetzen bestimmte Prüfgrößen in dem Steuergerät 2 bzw. der Software 3 eine generelle Freigabe zu bewirken, unabhängig von dem Lizenzschlüssel 7, welcher in der Rechnereinheit 1 gespeichert ist und von dem Hersteller des Steuergeräts 2 vergeben wird. Soll beispielsweise den Endkunden eine neue Softwareversion zur Verfügung gestellt werden, so ist durch Festlegen der dritten Prüfgröße PG3 auf einen Wert, der identisch der dritten Vergleichsgröße 9c ist, ein Aufspielen dieser Software 3 auf jedes beliebige elektronische Steuergerät 2 möglich, unabhängig von dessen zweiter Prüfgröße PG2.

Entsprechend ist das Belegen der zweiten Prüfgröße PG2 des elektronischen Steuergeräts 2 mit einem Wert, der identisch mit der dritten Vergleichsgröße 9c ist, möglich. Dadurch kann ein genereller Zugriff auf das Steuergerät 2 ermöglicht werden, z. B. um nach der Auslieferung des elektronischen Steuergeräts 2 eine erste Version der Software 3 aufzuspielen. Die zweite Prüfgröße PG2 des elektronischen Steuergeräts 2 wird nach dem Aufspielen einer ersten Version der Software 3 mit dem Wert der ersten Prüfgröße PG1 des Endkunden überschrieben.

Wird bei dem Vergleich der drei Prüfgrößen PG1, PG2 und PG3 mit den Vergleichsgrößen 9a bis 9c keine Identität erkannt, so wird in einem weiteren Verfahrensschritt die Überprüfung der drei Prüfgrößen untereinander auf Identität durchgeführt. Werden die drei Prüfgrößen PG1, PG2 und PG3 als identisch erkannt und ist das Ablaufdatum AD gültig, so erfolgt ebenfalls eine Freigabe des Zugriffs auf das elektronische Steuergerät 2 entsprechend dem fünften Freigabekriterium in Fig. 2.

Beim Vergleich der drei Prüfgrößen PG1, PG2 und PG3 untereinander werden zwei Abschnitte der Prüfgrößen PG1, Pg2 und PG3 unterschieden. Die Prüfgrößen PG1, PG2 und PG3 setzen sich aus zwei Elementen zusammen, von denen das erste z. B. ein Identifikation des Kunden ermöglicht und das zweite Element einen Index bildet. Die Prüfgrößen PG1, PG2 und PG3 können auch für unterschiedliche Prüfgrößenindizes PG1_{ind,} PG2_{ind} und PG3_{ind} als identisch erkannt werden. Zur Feststellung einer Identität zwischen den drei Prüfgrößen PG1, PG2 und PG3 ist es erforderlich, das die erste Prüfgröße PG1 mit der zweiten Prüfgröße PG2 vollständig identisch ist, also auch der erste Prüfgrößenindex PG1_{ind} mit dem zweiten Prüfgrößenindex PG2_{ind}. Zum Erkennen einer Identität darf der dritte Prüfgrößenindex PG3_{ind} höchstens gleich dem ersten und zweiten Prüfgrößenindex PG1_{ind} bzw. PG2_{ind} sein. Auf diese Weise kann beispielsweise ein Endkunde eine bestimmte Anzahl von Softwareupdates beim Erwerb einer Anlage mitkaufen, die er dann bei Erscheinen einer neuen Software 3 auf sein Steuergerät 2 aufspielen kann.

Erwirbt der Kunde beispielsweise beim Kauf eines Systems fünf zusätzliche Lizenzen für neue Versionen der Software 3, so wird die erste Prüfgröße PG1 in seinem Lizenzschlüssel 7 mit dem ersten Prüfgrößenindex PG1_{ind} z. B. auf 005 eingestellt, für einen im Klartext beispielsweise dreistelligen Prüfgrößenindex.

Das elektronische Steuergerät 2 wird mit einer zweiten Prüfgröße PG2 ausgeliefert, welche dem bereits beschriebenen neutralen Vergleichswert 9c entspricht. Beim Aufspielen einer ersten Version der Software 3, welche einen dritten Prüfgrößenindex PG3_{ind} enthält, der den Wert 000 aufweist, wird die zweite Prüfgröße PG2 in dem elektronischen Steuergerät 2 durch die erste Prüfgröße PG1 der Rechnereinheit 1 überschrieben. Damit weisen die erste Prüfgröße PG1 und die zweite Prüfgröße PG2 einen identischen ersten bzw. zweiten Prüfgrößenindex PG1_{ind} bzw. PG2_{ind} auf. Erhält der Endkunde eine neue Software 3, so beinhaltet diese Software 3 eine dritte Prüfgröße PG3 mit einem ihn identifizierenden ersten Element und mit einem um einen Zähler erhöhten dritten Prüfgrößenindex PG3_{ind} als zweitem Element. Mit jeder weiteren neuen Version der Software 3 wird der dritte Prüfgrößenindex PG3_{ind} um einen weiteren Zähler hochgesetzt. Im beschriebenen Beispiel ist damit die fünfte neue Softwareversion mit dem dritten Prüfgrößenindex PG3_{ind} als 005 die letzte Version, die der Endkunde mit seinem Lizenzschlüssel 7 auf das elektronische Steuergerät 2 aufspielen kann.

## Patentansprüche

1. Verfahren zur Freigabe des Zugriffs auf ein elektronisches Steuergerät (2) durch eine Rechnereinheit (1) zur Programmierung des elektronischen Steuergeräts (2) mit einer Software (3), wobei in der Recheneinheit (1) zumindest eine Vergleichsgröße (9a, 9b, 9c) und eine erste Prüfgröße (PG1) gespeichert sind, eine zweite Prüfgröße (PG2) in dem elektronischen Steuergerät (2) gespeichert ist und eine dritte Prüfgröße (PG3) in der Software (3) festgelegt ist, mit folgenden Verfahrensschritten:
- Einlesen der zweiten Prüfgröße (PG2) aus der elektronischen Steuereinheit (2) und der dritten Prüfgröße (PG3) aus der Software (3) in die Rechnereinheit (1);
- Überprüfen zumindest einer der Prüfgrößen (PG1, PG2, PG3) mit zumindest einer vorbestimmten Vergleichsgröße (9a, 9b, 9c) und/oder mit den beiden anderen Prüfgrößen (PG1, PG2, PG3) auf Identität;
- Vergleich der festgestellten Identität mit zumindest einem Teil eines Freigabekriteriums (PG1==dev; PG1==ser; PG2==uni, PG3==uni; PG1==PG2==PG3); und
- Freigabe des Zugriffs bei Erfüllung eines Freigabekriteriums (PG1==dev; PG1==ser; PG2==uni, PG3==uni; PG1==PG2==PG3).

2. Verfahren nach Anspruch 1,
**dadurch gekennzeichnet,**
**daß** die Gültigkeit eines auf der Rechnereinheit (1) gespeicherten Ablaufdatums (AD) ein Teil des zumindest einen Freigabekriteriums ist.

3. Verfahren nach Anspruch 2,
**dadurch gekennzeichnet,**
**daß** zur Überprüfung der Gültigkeit des Ablaufdatums (AD) das Ablaufdatum (AD) mit einem Systemdatum (11) verglichen wird.

4. Verfahren nach Anspruch 2 oder 3,
**dadurch gekennzeichnet,**
**daß** zur Überprüfung der Gültigkeit des Ablaufdatums (AD) das Ablaufdatum (AD) mit einem vorbestimmten festen Datumswert (11a) verglichen wird.

5. Verfahren nach einem der Ansprüche 1 bis 4,
**dadurch gekennzeichnet,**
**daß** bei Feststellung zumindest einer bestimmten Identität vor der Freigabe des Zugriffs die Existenz einer mit der Rechnereinheit (1) verbundenen Hardware-Kopierschutzvorrichtung (12) überprüft wird.

6. Verfahren nach einem der Ansprüche 1 bis 5,
**dadurch gekennzeichnet,**
**daß** bis zu dem erstmaligen Zugriff auf das elektronische Steuergerät (2) die zweite Prüfgröße (PG2) des elektronischen Steuergeräts (2) entsprechend einem Freigabekriterium (PG2==uni) mit einer Vergleichsgröße (9c) identisch ist und
**daß** die zweite Prüfgröße (PG2) bei dem erstmaligen Zugriff auf das elektronische Steuergerät (2) mit dem Wert der ersten Prüfgröße (PG1) eines Endkunden überschrieben wird.

7. Verfahren nach einem der Ansprüche 1 bis 6,
**dadurch gekennzeichnet,**
**daß** die Prüfgrößen (PG1, PG2, PG3) einen Prüfgrößenindex (PG1_{ind}, PG2_{ind}, PG3_{ind}) beinhalten.

8. Verfahren nach Anspruch 7,
**dadurch gekennzeichnet,**
**daß** sich ausschließlich in den Prüfgrößenindizes (PG1_{ind}, PG2_{ind}, PG3_{ind}) unterscheidende Prüfgrößen (PG1, PG2, PG3) als identisch bewertet werden, wenn die Prüfgrößenindizes (PG1_{ind}, PG2_{ind}, PG3_{ind}) der ersten Prüfgröße (PG1) und der zweiten Prüfgröße (PG2) gleich sind und mindestens gleich groß dem Prüfgrößenindex (PG3_{ind}) der dritten Prüfgröße (PG3) sind.

9. Verfahren nach einem der Ansprüche 1 bis 8,
**dadurch gekennzeichnet,**
**daß** die erste Prüfgröße (PG1) Bestandteil eines Lizenzschlüssels (7) ist.

10. Computerprogramm mit Programmcode zur Durchführung aller Verfahrensschritte nach einem der Ansprüche 1 bis 9, wenn das Programm (6) in einem Computer (1) ausgeführt wird.

11. Computerprogramm mit Programmcode, der auf einem maschinenlesbaren Träger gespeichert ist, zur Durchführung des Verfahrens nach einem der Ansprüche 1 bis 9, wenn das Programm (6) in einem Computer (1) ausgeführt wird.
